(19) Europäisches Patentamt
European Patent Office
Office européen des brevets

(11) **EP 3 306 272 B1**

(12) **FASCICULE DE BREVET EUROPEEN**

(45) Date de publication et mention
de la délivrance du brevet:
**24.02.2021 Bulletin 2021/08**

(51) Int Cl.:
***B61L 25/02*** *(2006.01)* ***G01S 19/45*** *(2010.01)*
***G01C 21/00*** *(2006.01)* ***G01C 21/12*** *(2006.01)*

(21) Numéro de dépôt: **17194964.7**

(22) Date de dépôt: **05.10.2017**

(54) **PROCÉDÉ DE LOCALISATION PONCTUELLE D'UN VÉHICULE ÉVOLUANT SUR UNE TRAJECTOIRE CONTRAINTE ET SYSTÈME ASSOCIÉ**

PUNKTUELLES LOKALISIERUNGSVERFAHREN EINES FAHRZEUGS, DAS SICH AUF EINER BEGRENZTEN BAHN BEWEGT, UND ENTSPRECHENDES SYSTEM

METHOD FOR MOMENTARY LOCATION OF A VEHICLE TRAVELLING ON A LIMITED PATH AND ASSOCIATED SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2016 FR 1601449**

(43) Date de publication de la demande:
**11.04.2018 Bulletin 2018/15**

(73) Titulaire: **Thales**
**92400 Courbevoie (FR)**

(72) Inventeur: **REVOL, Marc M.**
**26120 UPIE (FR)**

(74) Mandataire: **Marks & Clerk France**
**Immeuble "Visium"**
**22, avenue Aristide Briand**
**94117 Arcueil Cedex (FR)**

(56) Documents cités:
**ES-A1- 2 418 929    US-A- 5 375 059**

## Description

*DOMAINE DE L'INVENTION*

La présente invention concerne le domaine de la géolocalisation par satellites. L'invention concerne plus particulièrement un procédé et un système de localisation ponctuelle d'un véhicule évoluant sur une trajectoire contrainte, de tracé connu.

La présente invention s'applique à tout moyen de locomotion se déplaçant sur un trajet contraint et a pour but d'assurer un géopositionnement ponctuel de ce moyen en différents points de sa trajectoire.

*CONTEXTE DE L'INVENTION - ART ANTERIEUR*

Dans les systèmes de contrôle-commande de mobiles, de véhicules tels que les trains, il est nécessaire d'avoir un repère de référence avec deux objectifs, calculer de façon précise et sûre les courbes de contrôle et positionner le mobile. En effet, si le train suit des rails et n'a donc, par conséquent, qu'un seul degré de liberté, il est toutefois nécessaire de donner au conducteur les moyens de se repérer de manière précise durant son parcours le long de la voie ferrée.

Actuellement, ce repérage fait appel à une technologie de transmission d'information ponctuelle comportant deux constituants, à savoir une balise au sol, fixe (Eurobalise), placée le long de la voie et une antenne embarquée à bord du mobile. La balise au sol est passive et contient dans une mémoire ses références de localisation. Sur le train, en embarqué, se trouve l'antenne qui a deux fonctions, d'une part l'émission d'un signal de radio-identification, (ou RFID pour « *Radio Frequency IDentification* » selon la terminologie anglo-saxonne) qui a pour but de transmettre de l'énergie à la balise lorsque le mobile passe au niveau de celle-ci et d'autre part la réception du message émis par la balise avec l'énergie émise par le mobile. Le passage d'un train au niveau d'une de ces balises, déclenche donc l'émission d'un signal de radio-identification, qui est détecté et daté par un système de positionnement, embarqué à bord du train, et utilisé pour connaitre ponctuellement la position précise du train et ainsi recaler les moyens de localisation de bord, notamment l'odomètre embarqué à bord du train.

L'inconvénient de ce système de positionnement est qu'il constitue une charge d'infrastructure importante. En effet, ce système nécessite la pose de balises RFID environ tous les deux kilomètres et une fois installées, ces balises nécessitent d'être entretenues, ce qui représente un coût de maintenance élevé.

Il est également connu un projet d'amélioration de ce système de positionnement utilisant entre autre, un dispositif de localisation par satellites (ou GNSS pour « *Global Navigation Satellite System*» selon la terminologie anglo-saxonne) embarqué à bord du véhicule et fournissant une localisation (uniquement en position) permanente et continue ainsi que des balises virtuelles localisées en des positions déterminées le long de la trajectoire du véhicule. Le principe consiste simplement à suivre la position fournie par le récepteur GNSS et à détecter la date de passage du véhicule au plus près des positions définies a priori qui constituent lesdites balises virtuelles.

Le document US 5 375 059 A et le document EP 2 418 929 A1 décrivent des systèmes et des procédés d'amélioration de la précision de localisation en temps réel d'un véhicule autonome terrestre qui utilisent un système de positionnement global par satellites et un ensemble de balises virtuelles.

Dans une utilisation liée au domaine ferroviaire, le dispositif de localisation est configuré pour déclencher un « top de position » équivalent à celui d'une Eurobalise, lorsque la position fournie par le dispositif de localisation passe au plus près de la balise virtuelle. Ceci permet de rester compatible avec les interfaces de détection des balises physiques définis par les standards du système européen de contrôle des trains (ou ETCS pour « *European Train Control System* » *selon la terminologie anglo-saxone*)

Un inconvénient de ce système est que le rayon de protection de l'intégrité d'un positionnement GNSS varie entre 10m et 50m selon l'utilisation ou non de systèmes d'augmentation spatiale comme le GPS différentiel (ou DGPS pour « *Differential Global Positioning System* » selon la terminologie anglo-saxonne) ou le SBAS (pour « Satellite-Based Augmentation Systems » selon la terminologie anglo-saxonne), et suivant le système d'augmentation (DGPS, SBAS,...) considérés. Un tel rayon de protection permet difficilement de respecter les objectifs de performances d'intégrité imposés par les normes qui sont inférieurs à 5m voire moins, à l'image des capacités de localisation des systèmes basés sur les balises RFID. De plus, la qualité des mesures peut être dégradée par l'effet de perturbations de propagation ou d'interférences locales dans l'environnement de réception.

Un autre inconvénient vient du fait que la disponibilité des signaux de positionnement par satellites peut ne pas être suffisante dans le cas de véhicules évoluant au sol, pour des raisons de masquage ou d'indisponibilité des signaux satellites. Ainsi, la précision et l'intégrité des mesures de localisation peuvent être sensiblement moins bonnes que celles fournies par une balise physique robuste.

*PRESENTATION DE L'INVENTION*

Un but de l'invention est notamment de corriger tout ou partie des inconvénients de l'art antérieur du positionnement GNSS en proposant une solution permettant de recaler un dispositif de localisation embarqué à bord d'un véhicule, avec un système de référence ne nécessitant pas de balise physique placée sur sa trajectoire.

A cet effet, l'invention a pour objet un procédé de localisation ponctuelle d'un véhicule évoluant sur une trajectoire contrainte de tracé connu, ledit procédé permettant de détecter le point de passage du véhicule au plus près d'une position prédéterminée et étant mis en œuvre par un dispositif de localisation-réalisant des mesures de distance et de vitesse du véhicule le long de la trajectoire, ainsi qu'au moins un récepteur de géopositionnement recevant des signaux de positionnement d'au moins un satellite d'un système de géopositionnement par satellites, et comportant une base de temps locale mesurant l'instant courant, synchronisée sur le temps dudit système de géopositionnement par satellites, ledit procédé étant caractérisé en ce qu'il comporte:

- une étape Etp0, durant laquelle on exploite les informations de vitesse et de position du véhicule sur sa trajectoire, fournies par le dispositif de localisation, pour estimer, à l'instant courant, la date de passage au plus près de ladite position prédéterminée ($T_{cpa}$) en tenant compte des incertitudes sur la base de temps du dispositif de localisation;

- une étape Etp1, d'estimation durant laquelle on estime plusieurs dates possibles de passage du véhicule au plus près de la position prédéterminée, lesdites dates possibles encadrant la date estimée de passage au plus près de ladite position prédéterminée ($T_{cpa}$);

- une étape Etp2, durant laquelle on réalise l'estimation des positions possibles du véhicule sur la trajectoire pour chacune des dates possibles de passage au plus près de la position prédéterminée, en tenant compte des incertitudes de vitesse du véhicule et de position sur la trajectoire estimées au temps courant et extrapolées à la date estimée de passage du véhicule au plus près de la position prédéterminée ($T_{cpa}$), lesdites positions possibles étant incluses dans un intervalle de positions centré sur la position prédéterminée;

- une étape Etp3, durant laquelle on prédit, pour chacune desdites positions possibles du véhicule, la forme d'un jeu de signaux de géopositionnement par satellite correspondant au jeu de signaux de géopositionnement attendu pour cette position à la date possible correspondante;

- une étape Etp4, durant laquelle, pour chaque date possible de passage du véhicule au plus près de la position prédéterminée, on teste, par filtrage adapté, la corrélation spatiale entre les signaux de géopositionnement attendus et ceux reçus par le récepteur de géopositionnement à l'instant courant ;

la position possible estimée pour laquelle la corrélation est maximale étant considérée comme le point passage le plus proche de la position prédéterminée et l'instant courant correspondant comme l'instant de passage au plus près de la position déterminée.

Selon un mode de mise en œuvre particulier du procédé de localisation selon l'invention, la corrélation spatiale entre les signaux de géopositionnement attendus et ceux reçus par le récepteur de géopositionnement à chaque instant courant du déplacement, est réalisée en appliquant un ensemble d'opérations de corrélation temporelle autour de chacune des positions possibles, ou corrélation multiple, ladite corrélation multiple permettant la détection d'un pic de corrélation maximal.

La position de passage et l'instant courant pour lequel on détecte, après interpolation spatiale, le pic de corrélation maximum, sont considérés comme le point de passage et l'instant de passage au plus près de la position prédéterminée.

Selon un mode de mise en œuvre particulier, le procédé de localisation selon l'invention comporte une étape complémentaire de recalage de l'odomètre du dispositif de localisation embarqué à bord du véhicule, le recalage étant réalisé en considérant l'écart entre la position du point de passage au plus près de la position prédéterminée et la position délivrée par l'odomètre correspondant à l'instant courant déterminé comme étant l'instant de passage au plus près de la position prédéterminée.

L'invention a également pour objet un dispositif embarqué de localisation ponctuelle d'un véhicule évoluant sur une trajectoire contrainte de tracé connu configuré pour mettre en oeuvre le procédé de localisation selon l'invention, ledit dispositif comprenant au moins un tachymètre configuré pour délivrer un signal représentatif de la vitesse du véhicule, un odomètre configuré pour délivrer un signal représentatif du déplacement du véhicule, au moins un récepteur de géopositionnement configuré pour recevoir et traiter des signaux de géopositionnement par satellites, une base de temps, mesurant le temps courant, synchronisée sur le temps GNSS par l'intermédiaire du récepteur de géopositionnement, ainsi qu'au moins un module de calcul configuré pour mettre en œuvre le procédé selon l'une quelconque des revendications 1 ou 2 en exploitant les données fournies par les moyens de tachymétrie, d'odométrie et par le récepteur de géopositionnement.

Selon un mode de réalisation, le dispositif de localisation ponctuelle est configuré pour mettre en œuvre le procédé de localisation ponctuelle décrit précédemment lorsque la distance entre le véhicule et la position prédéterminée considérée est inférieure à une valeur prédéterminée.

Un autre objet de l'invention est un produit de programme informatique comprenant des instructions lisibles par ordinateur qui, lorsqu'elles sont exécutées sur un processeur, amènent le processeur à exécuter le procédé décrit précédemment.

*DESCRIPTION DES FIGURES*

D'autres particularités et avantages de la présente invention apparaîtront plus clairement à la lecture de la description ci-après, donnée à titre illustratif et non limitatif, et faite en référence aux dessins annexés, sur lesquels :

- La figure 1, illustre la relation entre la corrélation temporelle et la corrélation spatiale ;
- La figure 2, représente des étapes possibles du procédé de localisation selon l'invention ;
- La figure 3, illustre un exemple de mise en œuvre de la prédiction des phases des codes attendues au niveau du groupe de positions possibles du véhicules au plus près d'une balise virtuelle ;
- La figure 4 illustre un exemple de mise en œuvre de la détection de la date de passage du véhicule au plus près d'une balise virtuelle ;
- La figure 5 illustre le principe de corrélation multisatellites pour une position de balise virtuelle donnée ;
- La figure 6 illustre le principe de détection de la position et de la date de passage au plus près d'une balise virtuelle ;
- La figure 7 représente un exemple de résultat obtenu après sommation quadratique de fonctions de corrélation spatiale satellite à différente incidence.

Par la suite, on appellera « balise virtuelle » une position prédéterminée, ou point de référence, dont on connait précisément les coordonnées.

Par la suite également on entend par "temps courant" le temps mesuré par la base de temps locale du dispositif de localisation selon l'invention.

Par ailleurs par "odomètre" on entend ici tout dispositif de mesure connu pouvant être utilisé pour mesurer, à un instant courant donné, une distance parcourue par un mobile le long d'une trajectoire, un odomètre ferroviaire par exemple dans le cas où le mobile est un train.

De même, par "tachymètre" on entend ici tout dispositif de mesure connu pouvant être utilisé pour mesurer la vitesse de progression d'un mobile le long d'une trajectoire, un tachymètre ferroviaire par exemple dans le cas où le mobile est un train. Le tachymètre fournit la mesure de la vitesse courante du véhicule c'est-à-dire la vitesse à l'instant courant.

*DESCRIPTION DETAILLEE*

De façon préférentielle mais non limitative, la présente invention trouve son application dans le domaine ferroviaire pour recaler les mesures odométriques effectuées à bord de la motrice d'un train. De manière générale, l'invention peut s'appliquer à tout moyen de locomotion se déplaçant sur une trajectoire contrainte, de tracé connu, pour assurer un géopositionnement ponctuel en différents points de sa trajectoire. Ce peut être le cas, par exemple, dans le domaine maritime, pour le positionnement de navires dans des " rails de navigation ", pour des systèmes de navigations spatiaux sur orbite fixe ou encore, dans le domaine du transport par exemple, pour la localisation de véhicules de transport en commun, ou pour constituer un système de vérification de passages d'un véhicule à des positions obligatoires, etc.

Le procédé de localisation ponctuelle, selon l'invention, tire profit du fait que le véhicule que l'on cherche à localiser se déplace sur une trajectoire contrainte dont le tracé est connu.

Suivant un mode de réalisation, les différents points de ce tracé, ou plan de trajectoire, peuvent être enregistrés dans une zone mémoire renfermant une base de données. Cette base de données peut permettre au véhicule de reconstituer sa trajectoire.

Dans ce contexte, la géolocalisation du véhicule se limite donc à une recherche à une dimension: le temps. Les points de références par lesquels le véhicule va passer sont connus mais la date à laquelle passera le véhicule en ces points est quant à elle inconnue.

Par la suite, on supposera le véhicule que l'on cherche à localiser embarque un dispositif de localisation comprenant des moyens de mesure de la vitesse de déplacement du véhicule (tachymètre) ainsi que des moyens de positionnement par mesures odométriques. Le dispositif de localisation est donc capable d'estimer à tout instant la position courante du véhicule et l'incertitude de position sur la trajectoire curviligne qui lui est associée ainsi que la vitesse courante du véhicule et une estimation de l'erreur sur la vitesse courante.

A titre d'exemple, dans le domaine ferroviaire, il est connu que ce type de mesure de distance réalisée par odomètre dérive rapidement, de l'ordre de 5% à 10% de la distance parcourue et nécessite donc d'être recalée régulièrement afin de connaitre précisément la position de la motrice du train durant son déplacement.

Pour recaler les mesures de position d'un véhicule se déplaçant le long d'une trajectoire bien définie, le procédé selon l'invention utilise des balises virtuelles repérées le long du parcours du véhicule et cherche à connaitre avec précision l'instant de passage du véhicule au plus près de l'une ou l'autre de ces balises.

Les balises virtuelles sont constituées de points de repère de positions parfaitement connues, à la hauteur desquels le véhicule passe lorsqu'il parcourt sa trajectoire.

Ces balises peuvent être réparties de façon régulière ou non le long de la trajectoire du véhicule. Selon un mode de réalisation particulier, les balises virtuelles peuvent être espacées d'environ deux kilomètres. A chaque passage au plus près d'une balise virtuelle, le couple (date de passage, position de référence) détecté est pris en compte par l'odomètre afin de corriger sa dérive dans le temps.

Le procédé de localisation ponctuelle, selon l'invention, consiste à détecter le passage d'un véhicule au plus près de points de référence, à l'aide d'un système de positionnement par satellites (ou GNSS pour « *Global Navigation Satellite System* » selon la terminologie anglo-saxonne), comme le système GPS, Galileo, Glonass ou tout autre système équivalent, en exploitant la connaissance du déplacement du véhicule et en prédisant la forme d'un jeu de signaux de géopositionnement par satellites dans un intervalle de positions autour du point de référence considéré.

L'invention réalise ainsi, de façon ponctuelle, une synchronisation en temps et en position des moyens de mesure embarqués à bord du véhicule, en comparant la position du véhicule déterminée par lesdits moyens de mesure au passage au plus près du point de référence considéré et la position réelle de ce point de référence.

L'instant de passage au plus près du point de référence (balise virtuelle) considéré est déterminé de la façon suivante:

- On prédit à un instant courant ou instant de prédiction, l'instant de passage au plus près du point de référence considéré, cet instant de passage étant déterminé à partir des mesure délivrées par les moyens de mesure embarqués;

- On définit un certain nombre d'instants de passage possibles, compris dans un intervalle de temps déterminé centré sur l'instant prédit;

- Pour chaque instant de passage possible, on définit un certain nombre de positions possibles sur la trajectoire du véhicule, ces positions possibles étant définies dans un intervalle de position autour de la position correspondant à l'instant possible considéré, déterminée à partir de la position du véhicule sur sa trajectoire à l'instant de prédiction et de l'estimation de la vitesse fournie par le tachymètre à cet instant de prédiction;

- On détermine pour chaque instant possible et chaque position possible les signaux GNSS attendus;

- Au passage sur chacune des positions possibles ainsi déterminées, on mesure la concordance entre les signaux GNSS attendus et les signaux GNSS reçus à l'aide d'un récepteur GNSS embarqué.

Par suite la position possible, mesurée par les moyens embarqués, pour laquelle la concordance est maximale, est considérée, comme la position du véhicule au plus près du point de référence considéré, et l'instant mesuré correspondant comme l'instant de passage au plus près de ce point.

A cet effet le dispositif de localisation comprend au moins un récepteur de signaux GNSS pour la synchronisation de son temps local (temps système courant) sur le temps du système GNSS. On considère une incertitude sur le temps de quelques centaines de nanosecondes. Pour rappel, une incertitude de $1\mu s$ corres-pond à environ 300m d'incertitude liée au temps.

Ainsi, de façon avantageuse, le géopositionnement du véhicule n'est pas réalisé de façon continue mais de façon ponctuelle. Il n'est réalisé qu'au voisinage des positions d'implantation des balises virtuelles, au moment du passage du véhicule à proximité de ces positions. Il n'est pas nécessaire de l'assurer en dehors de ces points de référence.

Un avantage lié à l'utilisation ponctuelle et momentanée des signaux GNSS aux seuls moments de passage à proximité des positions prédéfinies des balises consiste en une réduction du temps d'exposition à d'éventuels défauts des signaux GNSS, ce qui permet de renforcer l'intégrité du procédé de localisation.

Un autre avantage, lié à la recherche de la meilleure adaptation spatiale par déplacement du mobile, réside dans la dé-corrélation des biais associés à aux trajets multiples réfléchis (d'une position de réception à une autre) dont les signaux GNSS peuvent être l'objet, ce qui réduit le risque d'existence d'un biais stable tout le long de la fonction de corrélation spatiale qui entraînerait un biais sur la détermination de la position du pic de corrélation maximum.

Contrairement à une méthode classique consistant à réaliser, par filtrage adapté, une synchronisation en temps des signaux satellites reçus par exploration du domaine des retards de propagation, correspondant au domaine d'incertitude de position, l'invention utilise une approche basée sur un principe de « détection à l'affut » des signaux GNSS, purement dédiée à la détection du passage du véhicule au niveau d'une position de référence.

Le principe consiste à prédire une date de passage du véhicule en un point particulier et à réaliser une synchronisation en position par intercorrélation des codes pseudo-aléatoires des signaux de géopositionnement par satellites.

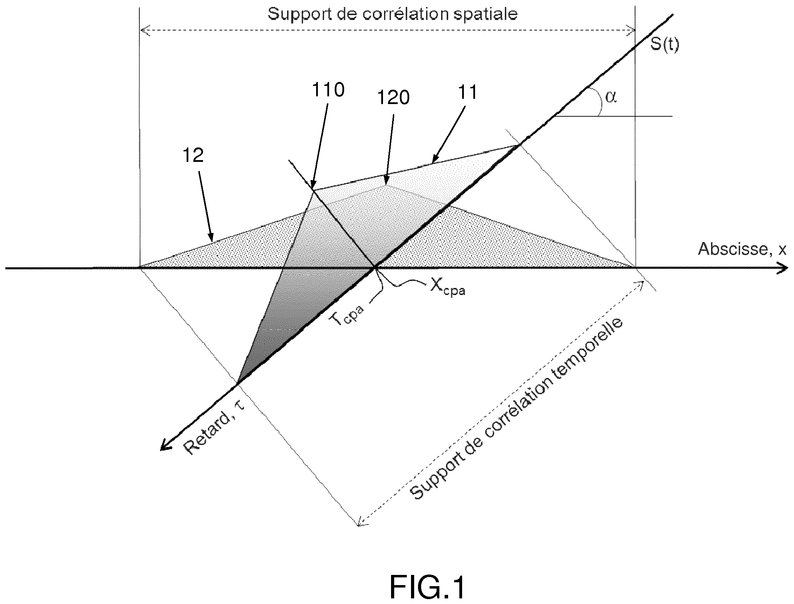

La figure 1 illustre l'équivalence entre la synchronisation en temps par corrélation temporelle et la synchronisation en position par corrélation spatiale. Cette figure présente une représentation graphique, en fonction du temps, d'une fonction de corrélation temporelle 11 du signal reçu d'un satellite de géopositionnement avec le signal attendu en un point d'abscisse $X_{cpa}$ et à un instant de passage $T_{cpa}$ au plus près d'une balise virtuelle.

Le support $T_{corr}$ de cette fonction de corrélation temporelle correspond à un chip de code (terme utilisé dans les techniques GNSS à différencier d'un bit qui est utilisé pour définir une unité d'information), soit $1\mu s$ pour le système GPS. Le maximum 110 de cette fonction de corrélation temporelle est obtenu à l'instant de synchronisation du signal attendu avec le signal reçu. Il indique la date de passage au plus près de la balise virtuelle.

La figure 1 présente également une représentation graphique, en fonction de l'abscisse curviligne, d'une fonction de corrélation spatiale 12 équivalente du signal reçu d'un satellite de géopositionnement avec le signal attendu en un point d'abscisse $X_{cpa}$ et à un instant de passage $T_{cpa}$ au plus près d'une balise virtuelle.

Le support $X_{corr}$ de cette fonction de corrélation spatiale correspond à la projection du support de corrélation temporelle sur l'axe de déplacement. Il peut être donné par la formule :

$$X_{corr} = c. \ T_{corr}/\cos(\alpha)$$

dans laquelle

$X_{corr}$ représente le support de la fonction de corrélation spatiale c représente la célérité de la lumière ;
$T_{corr}$ représente le support de la fonction de corrélation temporelle ;
$\alpha$ représente l'ange d'incidence du signal satellite par rapport à la direction de déplacement du véhicule ;
l'opérateur « . » représente le signe multiplié.

Le maximum 120 de cette fonction correspond à l'abscisse de synchronisation du signal attendu avec le signal reçu, il indique la position la plus proche de la balise virtuelle.

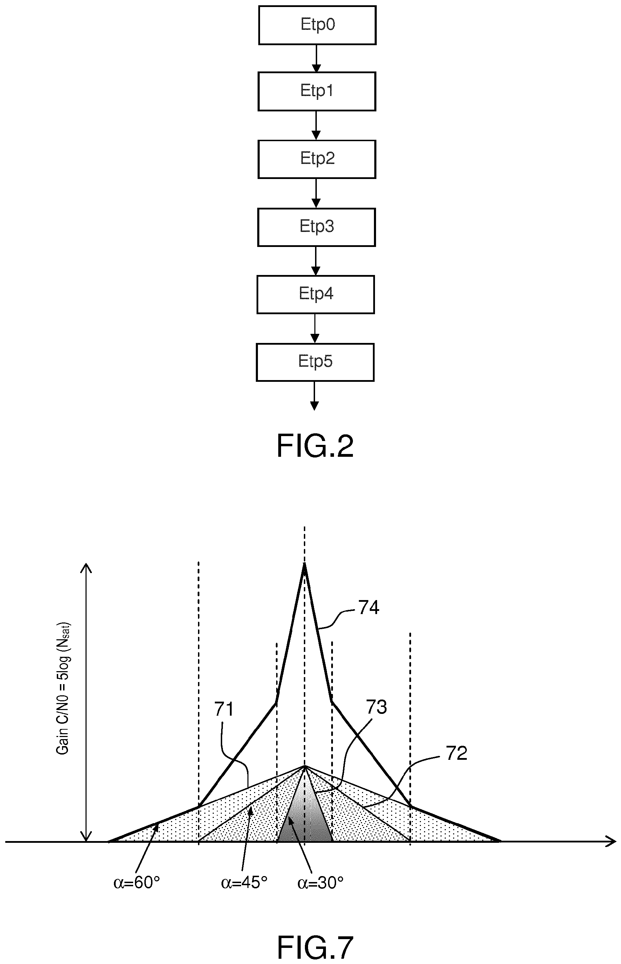

La figure 2 représente un ordinogramme illustrant des étapes possibles d'un exemple de mise en œuvre du procédé de localisation ponctuelle d'un véhicule évoluant sur une trajectoire contrainte selon l'invention.

Le procédé comprend ainsi une étape Etp0 d'estimation, à l'instant courant considéré, d'une date de passage estimée du véhicule au plus près d'une position prédéterminée (point de référence) ou balise virtuelle. L'estimation de cette date est réalisée à l'aide du dispositif de localisation au temps courant, à partir de la vitesse du véhicule mesurée à l'instant courant et de la distance séparant la position du véhicule à l'instant courant de la position prédéterminée.

Afin de tenir compte des incertitudes sur la base de temps du récepteur du dispositif de localisation, le procédé comprend également une étape Etp1 d'estimation de plusieurs dates possibles de passage du véhicule au plus près de la position prédéterminée. Ces dates possibles estimées sont contenues dans un intervalle de temps autour de ladite date de passage estimée au plus près de la position prédéterminée.

Cette étape peut, par exemple, être effectuée par un module de calcul du dispositif de localisation.

Le procédé comprend encore une étape Etp2 d'estimation du domaine des positions possibles du véhicule pour chacune des dates de passage possibles qui prend en compte les incertitudes de position et de vitesse du véhicule à l'instant courant et extrapolées à la date de passage estimée du véhicule au plus près de la balise virtuelle considérée, lesdites positions possibles étant incluses dans un intervalle de positions centré sur la position de la balise considérée.

Cette étape peut également être, par exemple, effectuée par un module de calcul du dispositif de localisation.

Le procédé comprend encore une étape Etp3, durant laquelle on prédit, pour chacune des positions possibles du véhicule déterminées à l'étape précédente, la forme d'un jeu de signaux de géopositionnement par satellite correspondant au jeu de signaux de géopositionnement attendu pour la position possible considérée à la date possible correspondante de passage du véhicule au plus près de la prochaine balise virtuelle.

Cette étape peut également être, par exemple, effectuée par un module de calcul du dispositif de localisation.

Le procédé comprend également une étape Etp4, durant laquelle, pour chaque date de passage possible au plus près de la balise virtuelle considérée, on calcule en temps courant, par corrélation temporelle, la concordance des signaux de géopositionnement reçus par le récepteur GNSS du dispositif de localisation ponctuelle avec les signaux de géopositionnement prédits associés à chaque position possible du véhicule.

Le pic de corrélation obtenu permettant de déterminer l'instant courant de meilleure concordance pour la position possible considérée.

Le procédé selon l'invention comporte finalement une étape Etp5, au cours de laquelle on détermine le pic d'amplitude maximale parmi les pics de corrélation déterminés pour chacune des positions possibles, l'instant courant pour lequel ce pic d'amplitude maximale est obtenu correspondant à la date de passage au plus près de la position prédéterminée.

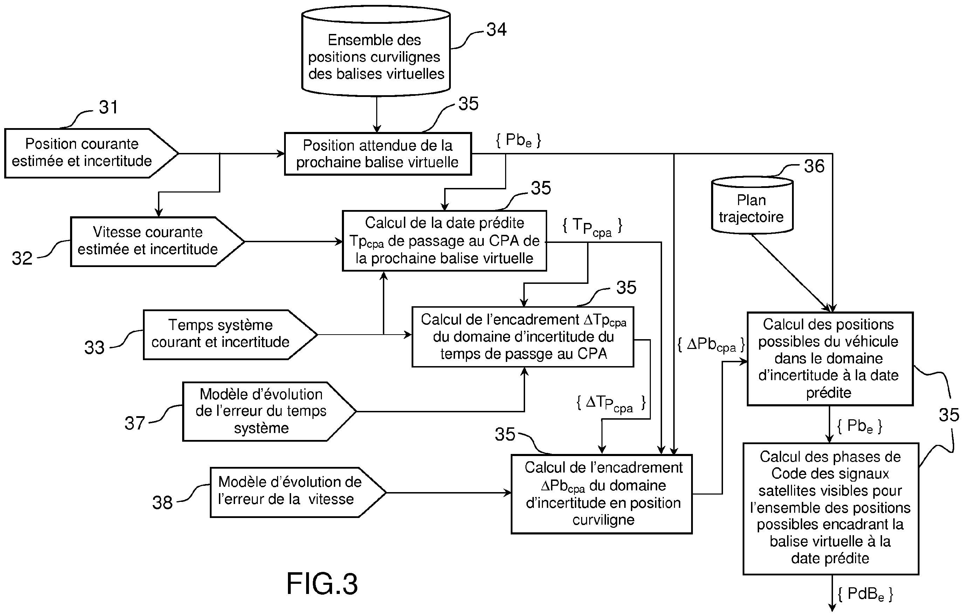

Ces différentes étapes vont à présent être développées en références aux figures 3 à 6.

En référence à la figure 3, tout au long du déplacement du véhicule, le tachymètre 32 et l'odomètre 31 embarqués fournissent au dispositif de localisation, des signaux représentatifs de la vitesse courante et du déplacement du véhicule le long de sa trajectoire. A partir de ces données et en fonction des positions des différentes balises virtuelles, un module de calcul 35 du dispositif de localisation évalue la distance qui sépare le véhicule de la prochaine balise virtuelle.

La position des différentes balises virtuelles le long de la trajectoire curviligne du véhicule et l'ordre dans lequel ces balises seront croisées peuvent, par exemple, être enregistrées dans une zone donnée de la mémoire 34 du dispositif de localisation.

Alternativement, suivant une variante de mise en œuvre du procédé, ces informations peuvent être transmises au dispositif de localisation par l'intermédiaire de tout moyen de communication approprié connu de l'homme du métier.

Connaissant la vitesse courante du véhicule, un module de calcul 35 du dispositif de localisation peut extrapoler une date estimée $Tp_{cpa}$ de passage au plus près de la prochaine balise virtuelle sur sa trajectoire.

Un premier problème se pose car le temps local 33 du véhicule que l'on cherche à localiser (i.e. le temps courant) n'est pas parfaitement synchronisé avec le temps du système GNSS.

A titre d'exemple, si on considère un décalage de 1 $\mu$s entre l'horloge locale 33 du récepteur de géopositionnement et la base de temps des satellites du système GNSS, cette désynchronisation engendre une erreur de calcul de la position du véhicule de 300m.

C'est pourquoi, afin de tenir compte de cette incertitude sur l'horloge du récepteur de signaux GNSS, on définit un intervalle d'incertitude $\Delta Tp_{cpa}$ autour de $T_{Pcpa}$ et on échantillonne cet intervalle. Les différents échantillons vont correspondre à différentes hypothèses de date de réception du signal GNSS afin de prendre en compte différentes hypothèses de synchronisation de l'horloge locale 33 avec la base de temps du système GNSS.

Le domaine d'incertitude constitué par l'intervalle de temps $\Delta Tp_{cpa}$ peut être déterminé par exemple à l'aide d'un modèle d'évolution de l'erreur du temps système c'est-à-dire de l'horloge locale 33 du récepteur du dispositif de localisation. Ce modèle peut par exemple être stocké dans une zone donnée de la mémoire 37 du dispositif de localisation.

On détermine donc plusieurs dates possibles de passage du véhicule au plus près de la position prédéterminée. Ces dates de passage possibles sont déterminées autour de la date estimée $Tp_{cpa}$ de passage au plus près de la balise virtuelle considérée.

A titre illustratif, le domaine d'incertitude temporel $\Delta Tp_{cpa}$ peut par exemple être échantillonné en prenant dix échantillons ce qui correspond, si on considère un domaine d'incertitude de 1$\mu$s, à une hypothèse de synchronisation à 0,1$\mu$s près.

Un autre problème provient du fait que le signal représentatif de la vitesse du véhicule fourni par le tachymètre est entaché d'incertitudes tout comme le signal représentatif du déplacement du véhicule le long de sa trajectoire fourni par l'odomètre entre la position du véhicule lors du dernier recalage de l'odomètre et sa position actuelle. De plus, pour déterminer la date estimée $Tp_{cpa}$ de passage au plus près de la prochaine balise virtuelle, le dispositif de localisation utilise la vitesse courante du véhicule ce qui ajoute une incertitude supplémentaire sur la date estimée de passage au plus près de la prochaine balise virtuelle.

Du fait de ces incertitudes, à la date de passage estimée par le dispositif de positionnement, le véhicule ne sera peut être pas au niveau de la position de la balise virtuelle mais soit avant soit après cette position.

Afin de tenir compte de cette erreur sur la date estimée de passage au plus près de la balise virtuelle, le dispositif de positionnement n'estime pas une position mais un encadrement de la position du véhicule autour de la position de la balise virtuelle, à la date de passage estimée $T_{Pcpa}$. Cet encadrement spatial, ou domaine d'incertitude, est fonction des incertitudes sur la vitesse du véhicule et sa position au moment où est extrapolée la date estimée de passage au plus près de la prochaine balise ainsi que de l'incertitude sur la vitesse future du véhicule entre la position au moment où est extrapolée ladite date estimée et la position de la prochaine balise virtuelle.

A titre de remarque, les modules de calcul 35 énoncés peuvent être un même module ou des modules séparés.

Le dispositif de positionnement estime donc, pour chacune des dates possibles de passage du véhicule au plus près de la position prédéterminée considérés, au cours d'une étape Etp2 du procédé de localisation ponctuelle, un ensemble de positions possibles Be du véhicule, autour de la position correspondant à la date possible considérée, compte-tenu de l'ensemble des incertitudes considérées.

A titre d'exemple nullement limitatif, on peut considérer un domaine d'incertitude en abscisse curviligne $\Delta Pb_{cpa}$ d'environ 500m autour de la position de la balise virtuelle. Dans le domaine temporel, cela se traduit par une incertitude d'environ 5s pour un véhicule se déplaçant à 100m/s (360 km/h) sur son abscisse curviligne.

Le domaine d'incertitude en abscisse curviligne $\Delta Pb_{cpa}$ peut être déterminé par exemple à l'aide d'un modèle d'évolution de l'erreur de la vitesse du véhicule que l'on cherche à localisé. Ce modèle peut par exemple être stocké dans une zone donnée 38 de la mémoire du dispositif de localisation.

Le nombre de positions possibles Be du véhicule et leurs emplacements peuvent être définis de façon à encadrer le domaine d'incertitude en position selon l'abscisse curviligne de la trajectoire et de façon à échantillonner suffisamment finement le domaine de corrélation spatial. L'espacement entre les positions possibles attendues peut être choisi de manière à ce que les échantillons de corrélation spatiale soient séparés de moins d'un chip de code (soit 300m pour le code C/A du système GPS), de sorte à pouvoir reconstituer par interpolation la position précise du maximum de la fonction de corrélation sur la trajectoire du véhicule.

Pour rappel le code d'acquisition C/A (pour « *Coarse Acquisition* » ou acquisition grossière) est un signal numérique composé de 1023 chips (terme utilisé dans les techniques GNSS à différencier d'un bit qui est utilisé pour définir une unité d'information) et qui se répète toutes les millisecondes.

A titre illustratif, on peut retenir un espacement des échantillons de 0,2 chip, (soit 60m pour le système GPS). Si on considère un domaine d'incertitude spatial de 500m autour d'une balise virtuelle, cela implique de calculer en parallèle 500/60 soit environ 83 positions virtuelles. Chaque position est retardée ou avancée d'environ $k.0,2 \cdot \cos(\alpha)$ $\mu$s par rapport à la date de passage possible considérée (k représentant l'indice de la position possible par rapport à l'emplacement de la balise virtuelle, $\alpha$ représentant l'angle d'incidence du signal par rapport à la direction de déplacement à chaque position et « . » représentant l'opérateur multiplicatif).

De façon avantageuse, l'incertitude sur la date de passage du véhicule au niveau d'un point de référence donné est transformée en une incertitude en position autour de la balise virtuelle à l'instant de passage estimé.

Une fois déterminée les dates possibles de passage du véhicule au plus près de la position prédéterminée considérée et les positions possibles Be du véhicule pour chaque date possible de passage autour de la date estimée $Tp_{cpa}$, il est possible de prédéterminer les phases de codes $Pd_{Be}$ de chaque satellites reçues à chaque emplacement des positions possibles du véhicule et pour chacune des dates possible de passage au plus près de la balise virtuelle, par le biais de l'estimation des distances entre chaque satellite de géopositionnement et chaque position possible du véhicule.

La position des satellites de géopositionnement visibles peut être calculée par le biais des éphémérides.

Ainsi, pour chacune des positions possibles du véhicule à chacune des dates possibles, et pour chacun des satellites de géopositionnement visibles au niveau de chaque positions possibles du véhicule, un module de calcul du dispositif de positionnement estime, au cours d'une étape Etp3, l'ensemble des signaux de géopositionnement par satellites attendus, tels qu'ils seront recus pour chaque position possible considérée et pour chaque date possible de passage du véhicule au niveau de la balise virtuelle.

Les signaux de géopositionnement étant déterministes, il est possible d'anticiper la séquence du signal (retard du code, position des satellites, canal Doppler) pour chacun des satellites qui sera visible à la position considérée et à la date de passage du véhicule estimée. Ces différents signaux peuvent être enregistrés dans une zone donnée de la mémoire du dispositif de localisation afin de le préparer à recevoir ces signaux des satellites de géopositionnement lorsque le véhicule s'approchera de la balise virtuelle considérée.

La génération des codes satellites locaux, au temps courant, peut, par exemple, être réalisée à l'aide d'oscillateurs contrôlés numériquement (ou NCO pour « *Numérical Controlled Oscillator* » selon la terminologie anglo saxonne) pilotés à partir de la phase de code attendue à l'instant $Tp_{cpa}$, pour chacun des signaux reçu sur chacune des positions possibles du véhicule à la date prédite.

Selon une particularité de l'invention, la détection de la position du véhicule s'effectue, comme cela a été dit précédemment, par une "détection à l'affut" de signaux de géopositionnement. Comme énoncé précédemment, l'ensemble des signaux de géopositionnement attendus, pour chacune des positions possibles du véhicule pour chaque date possible et pour chacun des satellites de géopositionnement visibles au niveau de chacune de ces positions possibles sont enregistrés dans une zone donnée de la mémoire du dispositif de localisation et sont comparés aux signaux reçus par le récepteur GNSS du dispositif de positionnement lors du déplacement du véhicule le long de sa trajectoire.

Par suite, tous les signaux des satellites de géopositionnement visibles du véhicule ayant été préparés avec le bon décalage, il n'y aura qu'un point de la trajectoire du véhicule pour lequel tous seront synchronisés en même temps. La connaissance de la position de ce point permettra de recaler le dispositif de localisation embarqué à bord du véhicule.

Le groupe de positions possibles du véhicule pour chacune des dates possibles de passage au plus près de la balise virtuelle considérée va permettre d'échantillonner plusieurs fonctions de corrélation curviligne entre les signaux GNSS reçus par le ou les récepteurs GNSS du dispositif de localisation pendant le passage du véhicule dans ces domaines d'incertitude spatial et temporel, et les signaux satellites attendus à chacune des positions possibles du véhicule, et pour chacune des dates possibles de passage au plus près de la balise virtuelle considérée.

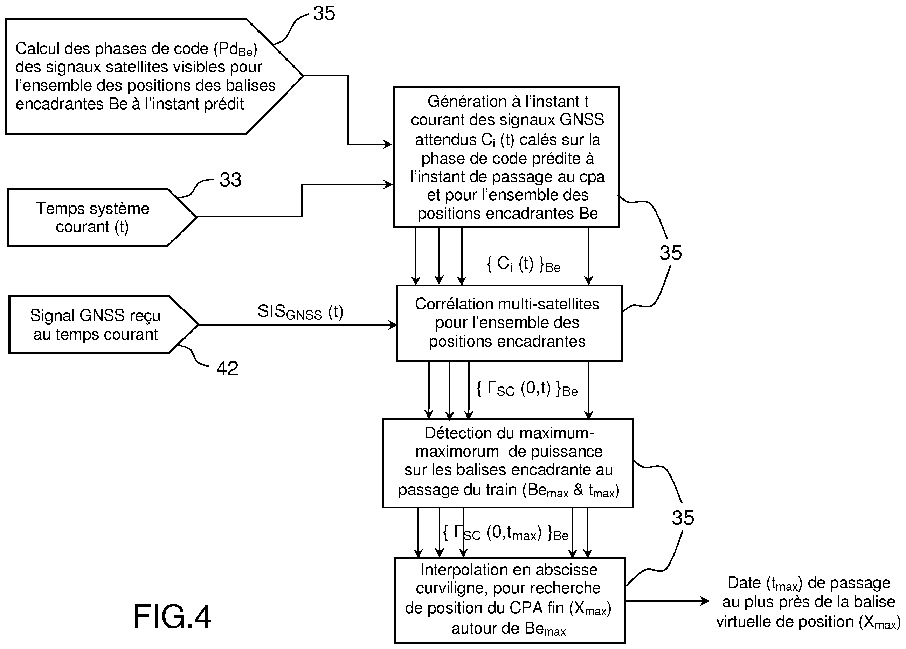

La figure 4 illustre un exemple de mise en œuvre de la détection de la date de passage du véhicule au plus près d'une balise virtuelle. Afin de ne pas surcharger la figure, on ne considère qu'une seule date possible de passage au plus près de la balise virtuelle.

Le principe consiste à réaliser un filtrage adapté continu entre les signaux de géopositionnement par satellites reçus par un récepteur GNSS du dispositif de localisation et un ensemble de codes locaux des satellites visibles, synchronisés sur les phases du code et de la porteuse attendus des signaux de géopositionnement à la date possible de passage au plus près de la balise virtuelle considérée et pour chacune des positions possibles du véhicule correspondant à cette date possible.

Pour chacune des positions possibles Be du véhicule, un module de calcul 35 du dispositif de localisation ponctuel génère, à l'instant courant t, les signaux de géopositionnement attendus Ci(t) calés sur la phase prédite à la date possible de passage du véhicule au plus près de la balise virtuelle considérée. Pour cela le module de calcul 35 peut utiliser, pour chacune des positions possibles, une base de temps 33 synchronisée sur le temps du système GNSS ainsi que les résultats de calcul des phases de code Pd de chacun des signaux GNSS des satellites visibles au niveau de la position possible considérée.

Ces résultats peuvent être fourni par un module de calcul, comme représenté sur la figure 4 ou être lus dans une zone dédiée de la mémoire du dispositif.

Si on considère le cas général dans lequel plusieurs dates possibles sont prédites, les opérations présentées précédemment sont effectuées en parallèle pour chacune des dates possibles de passage au plus près de la balise virtuelle considérée.

Pour chacune des dates possibles et à chaque position possible du véhicule, les signaux de géopositionnement attendus $\{Ci(t)\}_{be}$ associés à la date possible de passage au plus près de la balise virtuelle considérée et chaque satellite de géopositionnement visible sont ensuite corrélés avec les signaux de géopositionnement

$SIS_{GNSS}$ reçus par le récepteur GNSS 42 du dispositif de positionnement lors du déplacement du véhicule le long de sa trajectoire au cours d'une étape Etp4 de corrélation spatiale.

De façon avantageuse, la corrélation des signaux de géopositionnement est une corrélation globale prenant en compte, simultanément, les signaux reçus de plusieurs satellites de géopositionnement visibles de la position possible considérée.

Suivant un mode de mise en œuvre préférentiel, la corrélation utilise les signaux de tous les satellites de géopositionnement visible de la position possible considérée. Cette corrélation multisatellites est possible car, le véhicule se déplaçant sur une trajectoire contrainte, la recherche se fait selon une seule dimension. On sait que lorsque le véhicule passera au niveau de la position de la balise virtuelle, tous les signaux des satellites de géopositionnement visibles présenteront le maximum de la fonction de corrélation en même temps. L'intérêt de cette corrélation globale est qu'en cumulant les signaux, la méthode gagne en précision et donc en robustesse.

Un autre avantage de cette corrélation spatiale globale est qu'elle permet de bénéficier d'une meilleure robustesse vis-à-vis des trajets multiples spéculaires par rapport à une corrélation monosatellite.

Pour chacune des positions possibles du véhicule et pour chacune des dates possibles de passage au plus près de la balise virtuelle, les signaux de sortie des corrélateurs sont sommés de façon non cohérente. En effet, la cohérence de la phase porteuse n'étant pas assurée avec suffisamment de précision, du fait des aléas de propagation (par exemple du fait des retards ionosphériques, des trajets multiples...), il convient de ne pas réaliser de sommation cohérentes des sorties de corrélation des différents satellites d'une même position. Les erreurs résiduelles sur le code, après correction des retards issues des modèles étant faible par rapport au support de corrélation, ils n'impactent pas significativement la valeur de la fonction de corrélation et peuvent être sommés quadratiquement.

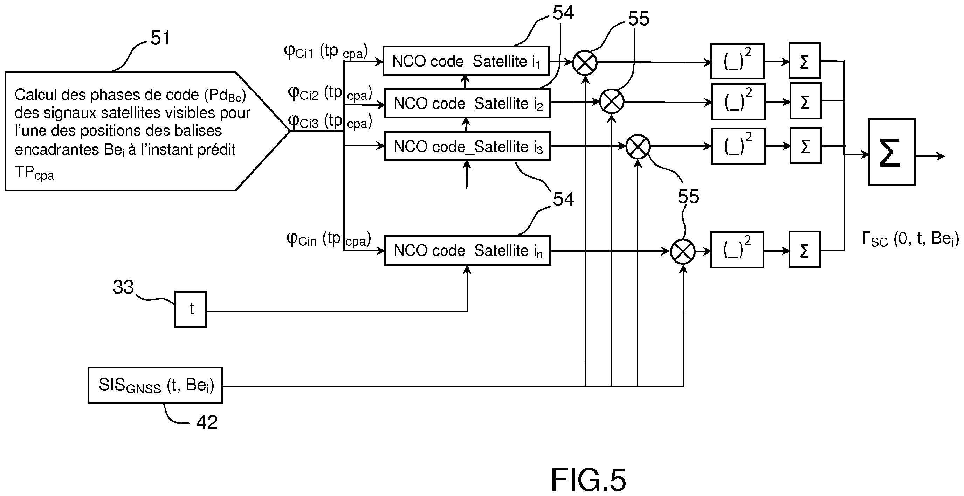

A titre illustratif, la figure 5 représente un exemple de mise en œuvre possible du traitement de corrélation multisatellites simultanée pour une position possible du véhicule $Be_i$ (l'indice i représentant le rang de la position) à une date possible de passage au plus près d'une balise virtuelle. Le traitement est appliqué à chacun des signaux reçus, par le récepteur 42 du dispositif de localisation, des satellites pris en compte et visibles de la position possible considérée. Ces signaux satellites fourniront autant de fonctions de corrélation spatiales le long du déplacement curviligne du véhicule que de satellite de géopositionnement visible pris en compte.

Les phases de code des signaux attendus de chaque satellite visible pris en compte de la position possible considérée, estimées au cours de l'étape Etp3 du procédé de localisation et par exemple stockées dans une zone mémoire 51, peuvent être générées par des oscillateurs contrôlés numériquement 54 synchronisés par une base de temps ou horloge locale 33. Les signaux de sortie de ces oscillateurs 54 sont corrélés avec les signaux satellites reçus par le récepteur GNSS 42 du dispositif de localisation ponctuel à l'aide de corrélateurs 55.

Les fonctions de corrélations ainsi obtenues pour les différents satellites visibles de la position possible considérée sont ensuite accumulées quadratiquement.

En référence à la figure 4, à l'issue de la corrélation multisatellites, on obtient plusieurs fonctions de corrélation globale $\{\Gamma_{SC}(0,t)\}_{Be}$, calculées aux différentes positions possibles Be du véhicule et au différentes dates possibles dans le domaine de recherche spatial et temporel de la position de la balise virtuelle.

Au fur et à mesure du déplacement du véhicule, un module de calcul du dispositif de localisation suit l'évolution de chaque fonction de corrélation afin de détecter son maximum. La recherche du maximum instantanée de chaque fonction de corrélation selon les abscisses est réalisée à chaque instant de calcul des fonctions de corrélation pour chaque position possible du véhicule et chaque date possible à partir du moment où la distance entre le véhicule et la prochaine balise virtuelle est inférieure à une valeur prédéterminée.

Selon un mode de mise en œuvre, le calcul des fonctions de corrélation peut être réalisé à partir du moment où le véhicule entre dans le domaine d'indétermination spatiale de la position de la balise virtuelle.

Selon une particularité du procédé selon l'invention, le dispositif de localisation ne recherche pas le maximum de la fonction de corrélation satellite par satellite mais effectue une corrélation cumulée multisatellites c'est-à-dire une corrélation simultanée de tous les signaux de géopositionnement des satellites visibles pour chacune des positions possibles du véhicule et chacune des dates possible de passage au plus près de la balise virtuelle.

Un module de calcul du dispositif de localisation mène en parallèle plusieurs filtrages adaptés correspondant aux signaux à recevoir aux différentes positions possibles du véhicule par rapport à la balise virtuelle, calculés pour chaque date possible attendu sur le plan de la trajectoire du véhicule.

La localisation de la position du véhicule à la date prédite est réalisée par la détection du maximum-maximorum de puissance de toutes les fonctions de corrélation globale sur les différentes positions possibles encadrant l'emplacement de la balise virtuelle et les différentes dates possibles encadrant la date prédite $T_{Pcpa}$, au cours d'une étape Etp5 du procédé de localisation ponctuelle.

Après détection de ce maximum-maximorum le module de calcul a accès à la date $T_{max}$ de passage au plus près de la balise virtuelle considérée et peut calculer, par interpolation, la position précise $X_{max}$ du maximum de corrélation selon l'abscisse curviligne, à partir des maxima de corrélation temporels obtenus aux différentes positions attendues, réparties le long de la trajectoire.

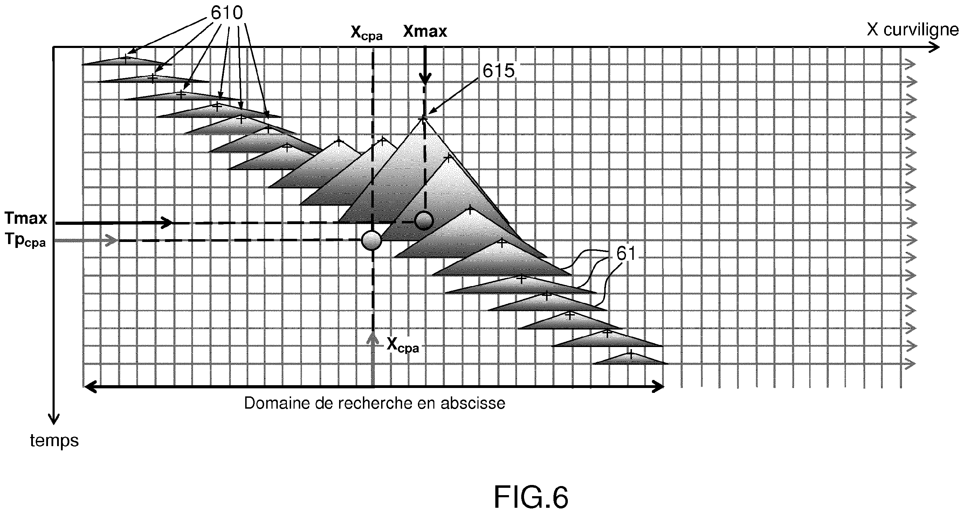

A titre illustratif, la figure 6 présente un exemple de résultat obtenu en appliquant le procédé selon l'invention et illustre le principe de détermination de la position et de la date de passage au plus près d'une balise virtuelle.

Cette figure représente l'évolution des fonctions de corrélation multisatellites 61 en fonction du temps pour chaque position possible du véhicule et pour la date possible correspondant à la meilleur hypothèse de synchronisation de l'horloge locale 33 du dispositif de positionnement avec la base de temps du système GNSS.

On suppose que pour chaque position possible du véhicule à la date possible considérée de passage au plus près de la position $X_{cpa}$ de la balise virtuelle, un module de calcul du dispositif de positionnement a prédéterminé les signaux de géopositionnement attendus.

Lorsque le véhicule va entrer dans le domaine de recherche de la position de la balise virtuelle, le dispositif de localisation va mettre en œuvre le procédé de localisation ponctuelle.

Au fur et a mesure de l'avancement du véhicule, chaque fonction de corrélation 61, calculée aux différentes positions possibles du véhicule va croitre, passer par un maximum instantané 610 ou pic de corrélation, puis décroître. Le dispositif de localisation est pré-synchronisé sur le signal GNSS attendu à chaque position possible et c'est le déplacement du véhicule qui fait évoluer la fonction de corrélation.

Parmi tous ces pics de corrélation, un seul est parfaitement adapté et atteint un maximum maximorum d'amplitude 615. Il indique le point pour lequel le signal GNSS est parfaitement synchronisé avec le signal prédit. Pour les autres points, les signaux GNSS reçus sont décalés par rapport aux signaux attendus et donc passent par un maximum instantané 610 qui n'est pas le maximum maximorum 615.

Une fois le maximum maximorum détecté, un module de calcul du dispositif de positionnement peut déduire la date de passage $T_{max}$ au plus près de la balise virtuelle considérée ainsi que l'abscisse curviligne $X_{max}$ la plus proche de cette balise. En effet, on observe ce maximum maximorum 615 pour une position qui n'est pas la position prédéterminée, ce qui signifie que les hypothèses qui avaient été faites au départ n'étaient pas exactes.

L'écart de position que l'on observe est consécutif de l'erreur de position initiale et de l'erreur d'extrapolation et permet au dispositif de localisation ponctuel de recaler les moyens d'odométrie à bord du véhicule.

Il est à noter que le module de calcul devant suivre toutes les fonctions de corrélations afin de détecter le maximum maximorum 615, cette détection n'est pas effectuée au temps courant mais est réalisée une fois le domaine de recherche de la balise virtuelle traversé et donc une fois l'abscisse curviligne $X_{max}$ la plus proche de la balise virtuelle considérée passée. Le recalage des moyens d'odométrie à bord du véhicule n'est donc pas réalisé au moment du passage au niveau de la balise virtuelle mais a posteriori.

Le domaine de corrélation spatial des signaux de géopositionnement par satellites étant de l'ordre de 300m (pour le système GPS) et dépendant de l'incidence des signaux GNSS, le dispositif de positionnement peut reconstruire la position précise du maximum de corrélation selon l'abscisse curviligne par interpolation des niveaux de corrélations estimés sur l'ensemble des positions possibles Be du véhicule à la date de passage au plus près de la balise virtuelle. La durée de balayage de la fonction de corrélation est fonction de la vitesse et de la direction de déplacement du véhicule.

A titre d'exemple, si on considère un véhicule se déplaçant à 100m/s, pour le système GPS avec le code C/A, la durée minimale est de 300/100 soit 3s pour un satellite dans l'axe de déplacement du véhicule (avec le maximum de contraste sur la fonction de corrélation). Cette durée augmente en 1/cos(a) de l'angle d'incidence α du satellite de géopositionnement par rapport au déplacement, réduisant d'autant le contraste de la fonction de corrélation.

Le domaine de corrélation spatial dépend donc de la direction d'incidence du signal GNSS par rapport à l'axe de déplacement du véhicule.

Les signaux "orthogonaux" au déplacement ne pouvant pas servir à lever l'indétermination de position, on peut éventuellement définir l'équivalent d'un coefficient d'affaiblissement de la précision (ou DOP pour « *Dilution Of Precision* » selon la terminologie anglo saxonne) pour évaluer la capacité d'utiliser la balise virtuelle comme " référence absolue " en tenant compte de la géométrie des satellites.

Pour rappel, pour une résolution standard dans les trois dimensions, on utilise pour cela une matrice des cosinus directeurs des angles d'arrivée, qui entrent en fait dans le système d'équation à résoudre.

Dans le cas d'une résolution à une dimension, un critère rigoureux équivalent peut être construit. Ce critère peut avoir pour forme :

$$DOP = 1/N \ \Sigma_i 1/\cos(\alpha_i)$$

Dans laquelle: DOP représente le critère équivalent,

N représente le nombre de satellites de positionnement en vue,

$\alpha_i$ représente l'angle d'arrivée du $i^{ème}$ satellite, i étant un indice variant de 1 à N.

On peut par exemple limiter la prise en compte des satellites à ceux qui présentent un angle d'incidence par rapport à la direction de déplacement inférieur à 60°, ce qui correspond à une élongation maximale du support de corrélation d'un facteur 2.

A titre illustratif, la figure 7 représente un exemple de résultat obtenu après sommation quadratique de fonctions de corrélation spatiale satellite à différentes incidences. Les courbes 71 à 73 sont respectivement des représentations graphiques de fonctions de corrélation pour un angle d'incidence du signal satellite par rapport à la direction de déplacement de 60°, 45° et 30°. La courbe 74 est la représentation graphique du cumul des fonctions de corrélation satellites.

Suivant un mode de mise en œuvre particulier, la durée d'intégration cohérente peut être choisie entre environ 10ms et environ 20ms, soit un échantillonnage temporel d'environ 100Hz. Si on considère un véhicule se déplaçant à 100m/s, cet échantillonnage conduit à une incertitude d'environ 1m ce qui est négligeable devant le support de corrélation (pour rappel le support de corrélation pour le code C/A du système GPS est d'environ 300m).

On suppose que le rapport signal à bruit standard d'un signal GPS, dans une bande de 1 Hz de bruit, est de 42 dB/Hz. Si on considère une durée d'intégration cohérente de 20ms (soit 50Hz de bande passante de bruit), le niveau de bruit est multiplié par 50, soit une réduction du rapport signal à bruit (CN0) égale à $10\log(50)$ soit 17 dB.

De plus, les accumulations non cohérentes des fonctions de corrélation des Nsat satellites au point maximum de la fonction de corrélation ajoute un terme égal à $10.\log.N_{sat}$, $N_{sat}$ représentant le nombre de satellites de géopositionnement visible considéré.

Le rapport signal à bruit est donc de l'ordre de $42\text{-}17+10.\log.N_{sat}$ soit $25dB + 10.\log.N_{sat}$ ce qui conduit à une incertitude sur la résolution de position de l'ordre du mètre concernant la position du pic de corrélation représentant le maximum maximorum (une fois éliminés les axes à vues non favorables). Cette incertitude est à comparer aux erreurs de plusieurs dizaines de mètres d'un positionnement standard.

Suivant un autre mode de mise en œuvre, les fonctions de corrélation peuvent être pondérées en tenant compte des axes à vue géométrique. De façon avantageuse, cela permet de renforcer le rapport signal à bruit de $5.\log(N_{sat})$, $N_{sat}$ représentant le nombre de satellite visible depuis la position possible considéré, par rapport à une poursuite GNSS classique et ainsi de fournir une meilleure sensibilité et une meilleure précision sur la date de passage en temps courant et la position de l'abscisse curviligne du point de détection présentant le pic de corrélation maximal.

Suivant un mode de mise en œuvre, les erreurs de propagation peuvent être corrigées avant la sommation.

Les fonctions de corrélations ne sont pas toutes centrées exactement autour du même instant de passage au maximum de puissance, les écarts de synchronisation entre signaux satellites reçus (dus notamment aux horloges satellites, aux retards de propagation ionosphérique et troposphérique, aux trajets multiples...) entrainant des erreurs de la position de la fonction de corrélation spatiale. Ces écarts sont de l'ordre de plusieurs dizaines de nanosecondes. Si on considère un écart de synchronisation de 100ns (soit 30m sur les pseudo-distances) et un véhicule se déplaçant à environ 100m/s, cela se traduit par une dispersion des positions des maxima de corrélation entre satellites, obtenus par balayage à la vitesse du véhicule, sur une plage de 30/100 soit 0,3 s.

Pour pallier l'effet de cette dispersion, et donc le bruit de détermination de passage au maximum, les distances attendues des satellites peuvent être corrigées, lors de la génération des codes locaux, à l'aide des modèles d'erreur disponibles (modèle d'erreur d'horloge, modèles d'erreur troposphérique & ionosphérique...) pour les réduire à quelques mètres, hors trajet multiples et interférences. Ces modèles peuvent par exemple être fournis par un récepteur GNSS bord ou via une liaison d'assistance.

Le procédé de localisation ponctuelle selon l'invention repose donc sur une détection de balises virtuelles placées sur le parcours du véhicule basée sur un géopositionnement par satellites réalisé de façon autonome à bord du véhicule, et sans infrastructure physique sur la trajectoire du véhicule.

De façon avantageuse, ce procédé de localisation permet d'émuler avec un récepteur GNSS une détection de passage très similaire à ce que permet une balise physique, utilisant par exemple la technique RFID, mais sans nécessiter d'infrastructures couteuses à installer et à entretenir.

Par exemple, dans une utilisation dans le domaine ferroviaire, dans le but de recaler le dispositif de localisation embarqué à bord de la motrice du train, ce procédé de localisation ponctuelle permet de rester compatible des standards de fonctionnement ETCS relatif à l'utilisation de balises physiques RFID.

De plus, la durée de passage du véhicule à proximité des balises virtuelles étant limitée, le risque de non-intégrité du signal GNSS pendant la recherche du maximum de la fonction de corrélation est réduit, par rapport à un fonctionnement classique nécessitant une poursuite continue des signaux satellites.

Au niveau de certaines balises virtuelles, il se peut que le nombre de satellite de géopositionnement visible ne soit pas suffisant pour estimer une position.

Dans ce cas le dispositif de localisation abandonne la localisation du véhicule au niveau de cette balise virtuelle. Le recalage des moyens odométriques n'est pas effectué et s'effectuera au niveau de la balise virtuelle suivante.

Afin de tenir compte du fait que le recalage n'a pas eu lieu et donc du fait que l'erreur à corriger sera plus importante, le dispositif de positionnement considèrera un domaine d'incertitude spatial plus important. Il fera de même pour l'incertitude de synchronisation pour tenir compte de l'évolution de l'erreur de synchronisation de l'horloge locale 33 du récepteur GNSS avec la base de temps des satellites de géopositionnement.

La présente invention a également pour objet un dispositif de localisation ponctuelle d'un véhicule évoluant sur une trajectoire contrainte configuré pour mettre en œuvre le procédé de localisation ponctuel précédemment décrit et pour être embarqué à bord du véhicule à localiser.

Comme cela a été dit précédemment, ce dispositif comprend un tachymètre 32, configuré pour délivrer un signal représentatif de la vitesse courante du véhicule ainsi qu'un odomètre 31, configuré pour délivrer un signal représentatif du déplacement du véhicule.

Le dispositif comprend également au moins un récepteur de géopositionnement 42 configuré pour recevoir et traiter des signaux de géopositionnement par satellites.

Le dispositif comprend, en outre, une base de temps 33 synchronisée sur le temps GNSS par l'intermédiaire du récepteur de géopositionnement 42.

Le dispositif de localisation ponctuelle comprend enfin une unité de calcul comportant un ou plusieurs modules de calcul 35, pouvant être constitué d'un ou plusieurs calculateurs, ainsi qu'une mémoire configurée en zones mémoires susceptibles de renfermer les données ou les paramètres nécessaires à la mise en œuvre par le calculateur des différentes opérations du procédé selon l'invention.

Par calculateur on entend ici un système comportant un ou plusieurs microprocesseurs, processeurs, ordinateurs ou tous autres moyens équivalents, pouvant être programmés de façon appropriée pour implémenter les différentes opérations de calcul mises en œuvre dans le cadre du procédé selon l'invention.

Un autre objet de la présente invention est un produit de programme informatique comprenant des instructions lisibles par un ordinateur ou tout type de dispositif informatique équivalent qui, lorsqu'elles sont exécutées sur un processeur, amènent le processeur à exécuter le procédé de localisation ponctuelle d'un véhicule évoluant sur une trajectoire contrainte tel que décrit précédemment.

**Revendications**

1. Procédé de localisation ponctuelle d'un véhicule évoluant sur une trajectoire contrainte de tracé connu, ledit procédé permettant de détecter le point de passage du véhicule au plus près d'une position prédéterminée et étant mis en œuvre par un dispositif de localisation réalisant des mesures de distance et de vitesse du véhicule le long de la trajectoire, ledit dispositif comprenant au moins un récepteur (42) de géopositionnement recevant des signaux de positionnement d'au moins un satellite d'un système de géopositionnement par satellites, ledit dispositif comportant une base de temps locale mesurant l'instant courant, synchronisée sur le temps dudit système de géopositionnement par satellites, ledit procédé étant **caractérisé en ce qu'**il comporte:

- une étape Etp0, durant laquelle on exploite les informations de vitesse et de position du véhicule sur sa trajectoire, fournies par le dispositif de localisation, pour estimer, à l'instant courant, la date de passage au plus près de ladite position prédéterminée ($T_{cpa}$) en tenant compte des incertitudes sur la base de temps du dispositif de localisation;
- une étape Etp1, durant laquelle on estime plusieurs dates possibles de passage du véhicule au plus près de la position prédéterminée, lesdites dates possibles étant localisées autour de la date estimée de passage au plus près de ladite position prédéterminée ($T_{cpa}$);
- une étape Etp2, durant laquelle on réalise l'estimation des positions possibles du véhicule sur la trajectoire pour chacune des dates possibles de passage au plus près de la position prédéterminée, en tenant compte des incertitudes de vitesse du véhicule et de position sur la trajectoire estimées au temps courant et extrapolées à la date estimée de passage du véhicule au plus près de la position prédéterminée ($T_{cpa}$), lesdites positions possibles étant incluses dans un intervalle de positions centré sur la position prédéterminée;
- une étape Etp3, durant laquelle on prédit, pour chacune desdites positions possibles, la forme d'un jeu de signaux de géopositionnement par satellite correspondant au jeu de signaux de géopositionnement attendu pour cette position à la date correspondante;
- une étape Etp4, durant laquelle, pour chaque date possible de passage du véhicule au plus près de la position prédéterminée, on teste, par filtrage adapté, la corrélation spatiale entre les signaux de géopositionnement attendus et ceux reçus par le récepteur de géopositionnement à l'instant courant;

la position possible estimée pour laquelle la corrélation est maximale étant considérée comme le point de passage le plus proche de la position prédéterminée et l'instant courant correspondant comme l'instant de passage au plus près de la position déterminée.

2. Procédé de localisation selon la revendication 1, **caractérisé en ce que** pour chacune des dates de passage possibles du véhicule au plus près de la position prédéterminée, la corrélation spatiale entre les signaux de géopositionnement attendus pour chacune des positions possibles associées à la date de passage possible considérée et ceux reçus par le récepteur de géopositionnement à chaque instant courant du déplacement, est réalisée par corrélation multiple, ladite corrélation multiple permettant la détection d'un pic de corrélation; la position de passage et l'instant courant pour lequel on détecte, après interpolation spatiale, le pic de corrélation le plus important, étant considérés comme le point de passage et l'instant de passage au plus près de la position prédéterminée.

**3.** Procédé de localisation selon une des revendications 1 ou 2, **caractérisé en ce qu'**il comporte une étape complémentaire de recalage de moyens d'odométrie du dispositif de localisation embarqué à bord du véhicule, le recalage étant réalisé en considérant l'écart entre la position du point de passage au plus près de la position prédéterminée et la position délivrée par les moyens d'odométrie correspondant à l'instant courant déterminé comme étant l'instant de passage au plus près de la position prédéterminée.

**4.** Dispositif de localisation ponctuelle d'un véhicule évoluant sur une trajectoire contrainte, de tracé connu, **caractérisé en ce qu'**il comprend:

   - des moyens de tachymétrie (32) configurés pour délivrer un signal représentatif de la vitesse du véhicule le long de ladite trajectoire contrainte,
   - des moyens d'odométrie (31) configurés pour délivrer un signal représentatif du déplacement du véhicule le long de ladite trajectoire contrainte,
   - au moins un récepteur de géopositionnement (42) configuré pour recevoir et traiter des signaux de géopositionnement par satellites,
   - une base de temps (33), mesurant le temps courant, synchronisée sur le temps GNSS par l'intermédiaire du récepteur de géopositionnement (42),
   - au moins un module de calcul configuré pour mettre en œuvre le procédé selon l'une quelconque des revendications 1 à 3 en exploitant les données fournies par les moyens de tachymétrie, d'odométrie et par le récepteur de géopositionnement.

**5.** Dispositif de localisation ponctuelle selon la revendication précédente dans lequel ledit dispositif est configuré pour mettre en œuvre le procédé de localisation ponctuelle selon une des revendications 1 ou 2 lorsque la distance entre le véhicule et la position prédéterminée considérée est inférieure à une valeur donnée prédéterminée.

**6.** Produit de programme informatique comprenant des instructions lisibles par ordinateur qui, lorsqu'elles sont exécutées sur un processeur comportant le au moins un module de calcul du dispositif de localisation de la revendication 4, amènent le processeur à exécuter le procédé selon une des revendications 1 à 3.

**Patentansprüche**

**1.** Verfahren zum punktuellen Orten eines Fahrzeugs, das auf einer begrenzten Bahn mit bekannter Spur fährt, wobei das Verfahren es ermöglicht, den einer vorbestimmten Position am nächsten liegenden Durchgangspunkt des Fahrzeugs zu erfassen, und von einem Ortungsgerät durchgeführt wird, das Abstands- und Geschwindigkeitsmessungen des Fahrzeugs entlang der Bahn durchführt, wobei das Gerät mindestens einen Geopositionierungsempfänger (42) umfasst, der Positionierungssignale von mindestens einem Satelliten eines Satelliten-Geopositionierungssystems empfängt, wobei das Gerät eine mit der Zeit des Satelliten-Geopositionierungssystems synchronisierte lokale Zeitbasis aufweist, die den aktuellen Zeitpunkt misst, wobei das Verfahren **dadurch gekennzeichnet ist, dass** es Folgendes aufweist:

   - einen Schritt Etp0, bei dem die vom Ortungsgerät bereitgestellten Geschwindigkeits- und Positionsinformationen des Fahrzeugs auf seiner Bahn benutzt werden, um zum aktuellen Zeitpunkt der Durchgangsmoment möglichst nahe an der vorbestimmten Position ($T_{cpa}$) unter Berücksichtigung der Unsicherheiten auf der Zeitbasis des Ortungsgeräts zu schätzen;
   - einen Schritt Etp1, bei dem mehrere mögliche Durchgangsmomente des Fahrzeugs möglichst nahe an der vorbestimmten Position geschätzt werden, wobei die möglichen Momente um den geschätzten Durchgangsmoment möglichst nahe an der vorbestimmten Position ($T_{cpa}$) liegen;
   - einen Schritt Etp2, bei dem mögliche Positionen des Fahrzeugs auf der Bahn für jeden der möglichen Durchgangsmomente möglichst nahe an der vorbestimmten Position unter Berücksichtigung der Unsicherheiten der Fahrzeuggeschwindigkeit und der Position auf der Bahn geschätzt werden, die zum aktuellen Zeitpunkt geschätzt und auf den geschätzten Durchgangsmoment des Fahrzeugs möglichst nahe an der vorbestimmten Position ($T_{cpa}$) extrapoliert werden, wobei die möglichen Positionen in einem Positionsbereich eingeschlossen sind, der auf der vorbestimmten Position zentriert ist;
   - einen Schritt Etp3, bei dem für jede mögliche Position die Form eines Satzes von Satelliten-Geopositionierungssignalen entsprechend dem für diese Position im entsprechenden Moment erwarteten Satz von Geopositionierungssignalen vorhergesagt wird;

- einen Schritt Etp4, bei dem für jeden möglichen Durchgangsmoment des Fahrzeugs möglichst nahe an der vorbestimmten Position die räumliche Korrelation zwischen den erwarteten Geopositionierungssignalen und den vom Geopositionierungsempfänger zum aktuellen Zeitpunkt empfangenen Signalen durch adaptive Filterung geprüft wird;

wobei die geschätzte mögliche Position, für die die Korrelation maximal ist, als der der vorbestimmten Position am nächsten liegende Durchgangspunkt und der entsprechende aktuelle Zeitpunkt als der der vorbestimmten Position am nächsten liegende Durchgangspunkt angesehen werden.

2. Ortungsverfahren nach Anspruch 1, **dadurch gekennzeichnet, dass** für jeden der möglichen Durchgangsmomente des Fahrzeugs möglichst nahe an der vorbestimmten Position die räumliche Korrelation zwischen den für jede der mit dem betrachteten möglichen Durchgangsmoment assoziierten möglichen Positionen erwarteten Geopositionierungssignalen und den vom Geopositionierungsempfänger zu jedem aktuellen Bewegungszeitpunkt empfangenen Geopositionierungssignalen durch Mehrfachkorrelation durchgeführt wird, wobei die Mehrfachkorrelation die Erkennung einer Korrelationsspitze ermöglicht; wobei die Durchgangsposition und der aktuelle Zeitpunkt, für den nach räumlicher Interpolation die größte Korrelationsspitze erfasst wird, als Durchgangspunkt und der Durchgangsmoment möglichst nahe an der vorbestimmten Position betrachtet wird.

3. Ortungsverfahren nach Anspruch 1 oder 2, **dadurch gekennzeichnet, dass** es einen ergänzenden Schritt des Neueinstellens von Wegmessmitteln des Ortungsgeräts an Bord des Fahrzeugs umfasst, wobei die Neueinstellung unter Berücksichtigung der Differenz zwischen der Position des der vorbestimmten Position am nächsten liegenden Durchgangspunkts und der von den Wegmessmitteln bereitgestellten Position entsprechend dem aktuellen Zeitpunkt erfolgt, der als der der vorbestimmten Position am nächsten liegende Durchgangszeitpunkt bestimmt wird.

4. Gerät zum punktuellen Orten eines Fahrzeugs, das auf einer begrenzten Bahn mit bekannter Spur fährt, **dadurch gekennzeichnet, dass** es Folgendes umfasst:

- Tachometriemittel (32), konfiguriert zum Bereitstellen eines Signals, das für die Geschwindigkeit des Fahrzeugs entlang der begrenzten Bahn repräsentativ ist,

- Wegmessmittel (31), konfiguriert zum Liefern eines Signals, das für die Bewegung des Fahrzeugs entlang der begrenzten Bahn repräsentativ ist,

- mindestens einen Geopositionierungsempfänger (42), der zum Empfangen und Verarbeiten von Satelliten-Geopositionierungssignalen konfiguriert ist,

- eine Zeitbasis (33), die die aktuelle Zeit misst und über den Geopositionierungsempfänger (42) mit der GNSS-Zeit synchronisiert ist,

- mindestens ein Rechenmodul, konfiguriert zum Implementieren des Verfahrens nach einem der Ansprüche 1 bis 3 anhand der von den Tachometrie- und Wegmessmitteln und vom Geopositionierungsempfänger bereitgestellten Daten.

5. Punktuelles Ortungsgerät nach dem vorherigen Anspruch, wobei das Gerät zum Durchführen des punktuellen Ortungsverfahrens nach Anspruch 1 oder 2 konfiguriert ist, wenn der Abstand zwischen dem Fahrzeug und der betrachteten vorbestimmten Position kleiner als ein vorbestimmter gegebener Wert ist.

6. Computerprogrammprodukt mit computerlesbaren Befehlen, die bei Ausführung auf einem Prozessor mit dem mindestens einen Rechenmodul des Ortungsgeräts nach Anspruch 4 bewirken, dass der Prozessor das Verfahren nach einem der Ansprüche 1 bis 3 durchführt.

**Claims**

1. Point location method for a vehicle travelling over a restricted trajectory of known route, the method enabling the point at which the vehicle passes closest to a predetermined position to be detected, and being implemented by a location device which carries out distance and speed measurements of the vehicle along the trajectory, the device comprising at least one geopositioning receiver (42) which receives positioning signals from at least one satellite of a satellite geopositioning system, the device having a local time base which measures the current time, synchronised with respect to the time of the satellite geopositioning system, the method being **characterised in that** it has:

- a step Etp0, during which the speed and position information items of the vehicle over the trajectory thereof, which are provided by the location device, are used in order to estimate, at the current time, the date of passing closest to the predetermined position ($T_{cpa}$), taking into account the uncertainties on the time base of the location device;

- a step Etp1, during which several possible dates for passage of the vehicle closest to the predetermined position are estimated, the possible dates being located around the estimated date of passage closest to the predetermined position ($T_{cpa}$);

- a step Etp2 during which the possible positions of the vehicle on the trajectory for each of the possible dates of passage closest to the predetermined position are estimated, taking into account the uncertainties of speed of the vehicle and position on the trajectory estimated at the current time and extrapolated at the estimated date of passage of the vehicle closest to the predetermined position ($T_{cpa}$), the possible positions being included in a range of positions centered on the predetermined position;

- a step Etp3, during which there is predicted, for each of the possible positions, the shape of a set of satellite geopositioning signals corresponding to the set of geopositioning signals anticipated for this position at the corresponding date;

- a step Etp4, during which, for each possible date of passage of the vehicle closest to the predetermined position, the spatial correlation between the geopositioning signals anticipated and those received by the geopositioning receiver at the current time are tested by means of adaptive filtering;

the possible estimated position for which the correlation is at a maximum being considered to be the point of passage closest to the predetermined position and the corresponding current time to be the time of passage closest to the determined position.

2. Location method according to claim 1, **characterised in that**, for each of the possible passage dates of the vehicle closest to the predetermined position, the spatial correlation between the geopositioning signals anticipated for each of the possible positions associated with the possible date of passage in question and those received by the geopositioning receiver at each current time of the movement, is carried out by means of multiple correlation, the multiple correlation enabling the detection of a correlation peak; the passage position and the current time for which, after spatial interpolation, the most significant correlation peak is detected, being considered to be the point of passage and the time of passage closest to the predetermined position.

3. Location method according to either claim 1 or claim 2, **characterised in that** it comprises a supplementary step of re-aligning the odometry means of the location device on-board the vehicle, the re-alignment being carried out taking into consideration the deviation between the position of the point of passage closest to the predetermined position and the position provided by the odometry means corresponding to the current time determined as being the time of passage closest to the predetermined position.

4. Point location device for a vehicle travelling over a restricted trajectory of known route, **characterised in that** it comprises:

- tachymetry means (32) which are configured to provide a signal representative of the speed of the vehicle along the restricted trajectory,
- odometry means (31) which are configured to provide a signal representative of the movement of the vehicle along said restricted trajectory,
- at least one geopositioning receiver (42) which is configured to receive and process satellite geopositioning signals,
- a time base (33) which measures the current time, synchronised with respect to the time GNSS by means of the geopositioning receiver (42),
- at least one calculation module which is configured to implement the method according to any one of claims 1 to 3, by using the data provided by the tachymetry means, odometry means and the geopositioning receiver.

5. Point location device according to the preceding claim, wherein the device is configured to implement the point location method according to either claim 1 or claim 2 when the distance between the vehicle and the predetermined position in question is less than a specific predetermined value.

6. Computer program product comprising instructions which can be read by a computer and which, when they are executed on a processor comprising the at least one calculation module of the location device of claim 4, cause the processor to carry out the method according to any one of claims 1 to 3.

FIG.1

EP 3 306 272 B1

```
┌──────────────┐
│     Etp0     │
└──────────────┘
        │
        ▼
┌──────────────┐
│     Etp1     │
└──────────────┘
        │
        ▼
┌──────────────┐
│     Etp2     │
└──────────────┘
        │
        ▼
┌──────────────┐
│     Etp3     │
└──────────────┘
        │
        ▼
┌──────────────┐
│     Etp4     │
└──────────────┘
        │
        ▼
┌──────────────┐
│     Etp5     │
└──────────────┘
        │
        ▼
```

## FIG.2

FIG.7

FIG.3

```
┌─────────────────────────────────┐ ╱─ 35
│ Calcul des phases de code (PdBe) │
│ des signaux satellites visibles pour │
│ l'ensemble des positions des balises │
│ encadrantes Be à l'instant prédit │
└─────────────────────────────────┘
```

Calcul des phases de code ($Pd_{Be}$) des signaux satellites visibles pour l'ensemble des positions des balises encadrantes Be à l'instant prédit

— 35

Génération à l'instant t courant des signaux GNSS attendus $C_i$ (t) calés sur la phase de code prédite à l'instant de passage au cpa et pour l'ensemble des positions encadrantes Be

— 33
Temps système courant (t)

$\{ C_i (t) \}_{Be}$

35

Signal GNSS reçu au temps courant

$SIS_{GNSS}$ (t)

— 42

Corrélation multi-satellites pour l'ensemble des positions encadrantes

$\{ \Gamma_{SC} (0,t) \}_{Be}$

Détection du maximum-maximorum de puissance sur les balises encadrante au passage du train ($Be_{max}$ & $t_{max}$)

35

$\{ \Gamma_{SC} (0,t_{max}) \}_{Be}$

Interpolation en abscisse curviligne, pour recherche de position du CPA fin ($X_{max}$) autour de $Be_{max}$

35

Date ($t_{max}$) de passage au plus près de la balise virtuelle de position ($X_{max}$)

FIG.4

FIG.5

FIG.6

## RÉFÉRENCES CITÉES DANS LA DESCRIPTION

**Documents brevets cités dans la description**

- US 5375059 A
- EP 2418929 A1